(19) Europäisches Patentamt / European Patent Office / Office européen des brevets

(11) **EP 4 310 019 A1**

(12) **EUROPEAN PATENT APPLICATION**
published in accordance with Art. 153(4) EPC

(43) Date of publication:
**24.01.2024 Bulletin 2024/04**

(21) Application number: **22833183.1**

(22) Date of filing: **28.06.2022**

(51) International Patent Classification (IPC):
**B65D 65/40** (2006.01)    **B65D 5/40** (2006.01)
**B65D 5/74** (2006.01)

(52) Cooperative Patent Classification (CPC):
**B65D 5/40; B65D 5/74; B65D 65/40**

(86) International application number:
**PCT/JP2022/025832**

(87) International publication number:
**WO 2023/277037 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2021   JP 2021108673**

(71) Applicant: **TOPPAN INC.**
**Tokyo 110-0016 (JP)**

(72) Inventor: **IMAIZUMI, Shukiko**
**Tokyo 110-0016 (JP)**

(74) Representative: **TBK**
**Bavariaring 4-6**
**80336 München (DE)**

(54) **PACKAGING MATERIAL AND CONTAINER**

(57)    A packaging material according to one aspect of the present discourse includes a laminated structure that includes a paper base material, an adhesive resin layer, a gas barrier layer and a sealant layer in this order, wherein the sealant layer contains an ethylene-methacrylic acid copolymer, and the sealant layer has a melt flow rate of 3.0 g/10 minutes or more and 40 g/10 minutes or less measured under conditions of a temperature of 190° C and a load of 2.16 kg.

*Fig.1*

## Description

### Technical Field

The present disclosure relates to a packaging material and a container.

### Background Art

Conventionally, in the field of packaging materials, liquid paper containers mainly made of paper have been used. Patent Literature 1 discloses a liquid paper container formed of a packaging material including a paper base material, a specific barrier layer (a gas barrier layer), an adhesive resin layer with a specific thickness and a heat-sealable resin layer (a sealant layer).

### Citation List

### Patent Literature

[Patent Literature 1] Japanese Unexamined Patent Publication No. 2001-171649

### Summary of Invention

### Technical Problem

Such a container (a paper container) generally includes a container main body having a top portion, side surfaces and a bottom portion made of a packaging material. For example, when the container main body has a rectangular tube shape, the container can be obtained by forming ruled lines on packaging material in advance, bending the packaging material along the ruled lines and heating and adhering the packaging material. In addition, when the container main body has a cylindrical shape, the container can be obtained by heating separate members constituting a top portion, a side surface, and a bottom portion, respectively, and then adhering them together. Such members can be obtained by bending the packaging material while the packaging material is heated to obtain a desired shape.

For example, when the packaging material is heated and adhered, and a polyethylene resin is used as a sealant layer, heat sealing is required at a high temperature of 200°C or higher, or 250°C or higher according to a thickness of the paper base material. The heat sealing at a high temperature causes thermal shrinkage of the gas barrier layer, which causes cracks and deteriorates the gas barrier properties.

Also, in the heat sealing at a high temperature, water in the paper which is the main material may evaporate to generate water vapor. The generated water vapor may penetrate into an interface between the paper and the adhesive resin layer and may form voids, which is a so-called foaming phenomenon. When voids are formed due to the foaming phenomenon, and the packaging material is subsequently heated, heat during heating is less likely to be transferred to the paper in portions in which the voids are formed. As a result, excessive heat is accumulated in the gas barrier layer, cracks and pinholes are generated, and gas barrier properties are lowered. The foaming phenomenon also leads to leakage of contents.

When the container main body has a cylindrical shape, the member is obtained by bending the packaging material while heating, and thus the heat causes the thermal shrinkage and the foaming phenomenon in the gas barrier layer.

Moreover, the packaging material is obtained by heating and laminating materials constituting the packaging material, but the heating causes thermal shrinkage of the gas barrier layer, which causes cracks and deteriorates the gas barrier properties.

Furthermore, since the container main body is formed by bending the packaging material as described above, there is a problem that cracks and pinholes are likely to occur in a bent portion and the gas barrier property is likely to deteriorate.

### Solution to Problem

The present disclosure provides a packaging material capable of curbing leakage of contents and obtaining a container having excellent gas barrier properties, and a container obtained using the packaging material.

A packaging material according to an aspect of the present disclosure includes a laminated structure including a paper base material, an adhesive resin layer, a gas barrier layer, and a sealant layer in this order, wherein the sealant layer includes an ethylene-methacrylic acid copolymer, and the sealant layer has a melt flow rate of 3.0 g/10 minutes or more and 40 g/10 minutes or less measured under conditions of a temperature of 190° C and a load of 2.16 kg.

According to the packaging material according to the present disclosure, it is possible to obtain a container that curbs leakage of contents and has excellent gas barrier properties. Such an effect is presumed to be produced by the following mechanism. That is, since the ethylene-methacrylic acid copolymer contained in the sealant layer has a low melting point, it is possible to perform lamination of the materials constituting the packaging material at a low temperature. Therefore, thermal shrinkage of the gas barrier layer due to heating can be curbed. Similarly, since heating at the time of bending and bonding of the packaging material can be performed at a low temperature, it is possible to curb occurrence of thermal shrinkage and a foaming phenomenon of the gas barrier layer due to heating. In addition, among resins with a low melting point, the ethylene-methacrylic acid copolymer exhibits high strength due to a strong intermolecular bonding force caused by hydrogen bonding between carboxyl groups, and also exhibits moderate flexibility due to a structure derived from ethylene. Further, since the melt flow rate of the ethylene-methacrylic acid copolymer is within the above range, unevenness in a thickness of the sealant layer is curbed and adhesion between the sealant layers is improved. Therefore, leakage of the contents in an obtained container is curbed, and the obtained container has excellent gas barrier properties.

The gas barrier layer may have a film base material and a deposition layer because in this case the container has excellent water resistance and recyclability, the film base material may include a polypropylene film, and the deposition layer may contain an inorganic oxide. Since the vapor deposition layer has superior gas barrier properties, it may be disposed between the film base material and the adhesive resin layer. The adhesive resin layer may contain an ethylene-methacrylic acid copolymer because in this case the container has better gas barrier properties, and the adhesive resin layer may have a melt flow rate of 3.0 g/10 minutes or more and 40 g/10 minutes or less measured under conditions of a temperature of 190°C and a load of 2.16 kg.

A resin contained in the sealant layer may have a melting point of 105°C or less because the container is more excellent in gas barrier properties, and also a Vicat softening point thereof may be 95°C or less. From the same viewpoint, the resin contained in the sealant layer may have a durometer hardness of 45 or more at 23°C with a type D durometer.

A container according to another aspect of the present disclosure is made of the packaging material. This container maintains excellent gas barrier properties even when tension is applied or bending is performed in a manufacturing process (a box-forming process).

## Advantageous Effects of Invention

According to the present disclosure, a packaging material capable of curbing leakage of contents and obtaining a container having excellent gas barrier properties, and a container obtained using the same are provided.

## Brief Description of Drawings

FIG. 1 is a cross-sectional view schematically showing one embodiment of a packaging material according to the present disclosure.
FIG. 2 is a cross-sectional view schematically showing another embodiment of the packaging material according to the present disclosure.
FIG. 3 is a perspective view schematically showing one embodiment of a container according to the present disclosure.
FIG. 4 is a perspective view schematically showing another embodiment of the container according to the present disclosure.

## Description of Embodiments

Hereinafter, embodiments of the present disclosure will be described with reference to the drawings. The present disclosure is not limited to the following embodiments.

[Packaging material]

<First embodiment>

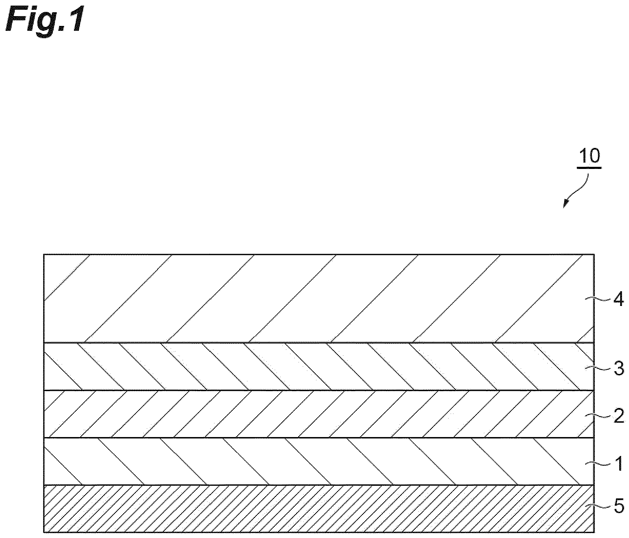

A packaging material according to a first embodiment will be described below. FIG. 1 is a cross-sectional view schematically showing a packaging material according to a first embodiment. As shown in FIG. 1, the packaging material 10 according to this embodiment has a laminated structure including a paper base material 1, an adhesive resin layer 2, a gas barrier layer 3, and a sealant layer 4 in this order. A protective layer 5 is disposed on a surface of the paper base material 1 opposite to a surface in contact with the adhesive resin layer 2. Each component of the packaging material 10 will be described below.

(Paper base material)

As the paper base material 1, for example, paper having shapeability, bending resistance, rigidity, stiffness, strength, and the like can be used. As such paper, for example, strong sizing bleached or unbleached paper, pure white roll paper, kraft paper, cardboard and processed paper can be used.

A basis weight of the paper base material 1 is preferably 80 to 600 $g/m^2$ and more preferably 200 to 450 $g/m^2$, because an obtained container has better gas barrier properties.

Desired printed patterns such as characters, figures, patterns and symbols can be arbitrarily formed on the paper base material 1 by a normal printing method.

(Adhesive resin layer)

The adhesive resin layer 2 contains an ethylene-methacrylic acid copolymer. The ethylene-methacrylic acid copolymer contained in the adhesive resin layer 2 may be the same as or different from an ethylene-methacrylic acid copolymer contained in the sealant layer 4.

A melt flow rate of the adhesive resin layer 2 measured under conditions of a temperature of 190 °C and a load of 2.16 kg is 3.0 g/10 minutes or more and 40 g/10 minutes or less. The melt flow rate of the adhesive resin layer 2 may not fall within the above range. A method and a preferred numerical range for measuring the melt flow rate are the same as those for the sealant layer 4.

A measuring method and a preferred numerical range of a melting point, a Vicat softening point and a durometer hardness of the ethylene-methacrylic acid copolymer contained in the adhesive resin layer 2 are the same as those of the ethylene-methacrylic acid copolymer contained in the sealant layer 4.

A thickness of the adhesive resin layer 2 is preferably 1 to 40 $\mu$m, more preferably 10 to 40 $\mu$m, and even more preferably 15 to 25 $\mu$m, because an obtained container has more excellent gas barrier properties.

The material of the adhesive resin layer 2 is not limited to the ethylene-methacrylic acid copolymer. Such materials include, for example, low density polyethylene, linear low density polyethylene, polypropylene, and copolymers of polyethylene and polyvinyl acetate. When the material of the adhesive resin layer 2 is a resin other than the ethylene-methacrylic acid copolymer, a melting point, a Vicat softening point and a durometer hardness of such a resin may be similar to those of the ethylene-methacrylic acid copolymer. When the adhesive resin layer 2 contains two or more resins as a composition, the melting point, Vicat softening point and durometer hardness are values for the resin composition as a whole.

When the adhesive resin layer 2 contains a resin other than the ethylene-methacrylic acid copolymer, the content of the ethylene-methacrylic acid copolymer in the adhesive resin layer 2 may be 80% by mass or more, 90% by mass or more, or 95% by mass or more based on the total amount of the adhesive resin layer.

(Gas barrier layer)

The gas barrier layer 3 is a polypropylene film. A thickness of the gas barrier layer 3 is preferably 15 to 30 $\mu$m, and more preferably 18 to 20 $\mu$m from the viewpoint of ease of processing such as laminating processing. Materials other than the polypropylene film can be used for the gas barrier layer 3. Such materials include, for example, a polyethylene film, a polyethylene terephthalate film and a nylon film. Moreover, the film material used as the gas barrier layer 3 may be a monoaxially stretched film or a biaxially stretched film.

(Sealant layer)

The sealant layer 4 contains an ethylene-methacrylic acid copolymer.

The melt flow rate of the sealant layer 4 measured under conditions of a temperature of 190°C and a load of 2.16 kg is 3.0 g/10 minutes or more and 40 g/10 minutes or less. The melt flow rate is preferably 10 g/10 minutes or more, more preferably 20 g/10 minutes or more, and still more preferably 30 g/10 minutes or more, because an obtained container has even better gas barrier properties. The melt flow rate is measured according to JIS K7210-1.

The melting point of the ethylene-methacrylic acid copolymer is preferably 105°C or lower because lamination at low temperatures is allowed and the obtained container has even better gas barrier properties. The melting point of the ethylene-methacrylic acid copolymer can be measured using a differential scanning calorimeter (DSC).

The Vicat softening point of the ethylene-methacrylic acid copolymer is preferably 95°C or less, and more preferably 85°C or less, because the obtained container has even better gas barrier properties. The Vicat softening point is measured according to JIS K7206:1999.

The durometer hardness of the ethylene-methacrylic acid copolymer at 23°C with a type D durometer is preferably 45 or more, and may be 60 or less, because the packaging material has sufficient elongation and elasticity, and the obtained container has further excellent gas barrier properties. The durometer hardness is a value measured at 23°C according to JIS K7215:1986.

The thickness of the sealant layer 4 is preferably from 30 to 150 $\mu$m, and more preferably from 50 to 80 $\mu$m, because the obtained container has more excellent gas barrier properties.

The sealant layer 4 may further contain a resin other than the ethylene-methacrylic acid copolymer. Examples of such a resin include low-density polyethylene, linear low-density polyethylene, polypropylene, and copolymers of polyethylene and polyvinyl acetate.

When the sealant layer 4 contains a resin other than the ethylene-methacrylic acid copolymer, the melting point, Vicat softening point and durometer hardness of the resin are values for a resin composition as a whole including the resin.

When the sealant layer 4 contains a resin other than the ethylene-methacrylic acid copolymer, the content of the ethylene-methacrylic acid copolymer in the sealant layer 4 may be 80% by mass or more, 90% by mass or more, or 95% by mass or more based on the total amount of the sealant layer.

(Protective layer)

A material of the protective layer 5 may be a polyethylene resin, for example. When the protective layer 5 is made of a polyethylene resin, the obtained container has excellent recyclability. The polyethylene resin is preferably medium-density polyethylene and high-density polyethylene, because it has high physical strength and the obtained container has even more excellent gas barrier properties. A thickness of the protective layer 5 is preferably from 10 to 30 $\mu$m, and more preferably from 15 to 20 $\mu$m, because the obtained container has more excellent gas barrier properties.

The packaging material 10 is obtained by laminating each of the layers. A method for laminating each of the layers include, for example, an extrusion lamination method, a T-die extrusion method, a co-extrusion lamination method, an inflation method, and a co-extrusion inflation method. A major surface of each of the layers may be subjected to, for example, corona treatment, plasma treatment and ozone treatment prior to the lamination.

According to the packaging material 10 configured as described above, the following effects are achieved. That is, since the polypropylene film is inferior in heat resistance to the polyethylene terephthalate film, it shrinks greatly due to heat during lamination. However, since the ethylene-methacrylic acid copolymer contained in the sealant layer 4 and the adhesive resin layer 2 has a low melting point, the materials constituting the packaging material can be laminated at a low temperature. Therefore, thermal shrinkage of the polypropylene film due to heating can be curbed. Similarly, since the packaging material can be bent and heated at a low temperature during adhering, it is possible to curb the occurrence of thermal shrinkage and foaming phenomenon in the polypropylene film due to heating.

Moreover, when the gas barrier layer is a polypropylene film, the rigidity of the packaging material is higher than when it is a polyethylene terephthalate film. Therefore, a larger force is applied to a bent portion of the packaging material. However, even among resins with a low melting point, the ethylene-methacrylic acid copolymer contained in the sealant layer 4 and the adhesive resin layer 2 exhibits high strength due to a strong intermolecular bonding force caused by hydrogen bonding between carboxyl groups, and also exhibits moderate flexibility due to a structure derived from ethylene. Further, since the melt flow rate of the ethylene-methacrylic acid copolymer is within a specific range, unevenness in the thickness of the sealant layer 4 is curbed, and adhesion between the sealant layers is improved. Therefore, even when the gas barrier layer 3 is a polypropylene film, leakage of the contents in the obtained container is curbed, and the obtained container has excellent gas barrier properties. In addition, since the same olefinic resin is used in the sealant layer 4, the gas barrier layer 3 and the adhesive resin layer 2, the obtained container has excellent recyclability. In addition, since the ethylene-methacrylic acid copolymer has a feature in which hot tack properties can be obtained in a wide heat sealing temperature range from low temperature to high temperature compared to low density polyethylene, the packaging material 10 tends to be excellent in terms of foreign matter bite sealing properties and the like.

<Second embodiment>

A packaging material according to a second embodiment will be described below. Points not described below are the same as those of the packaging material according to the first embodiment, unless inconsistency occurs.

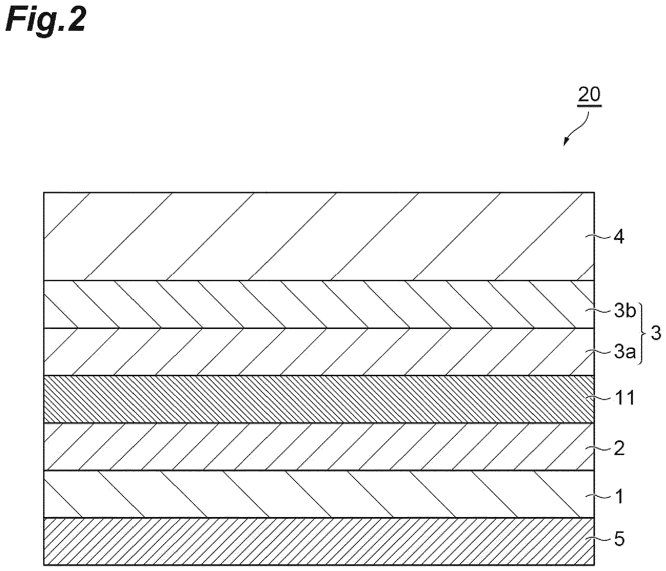

FIG. 2 is a cross-sectional view schematically showing the packaging material according to the second embodiment. As shown in FIG. 2, the packaging material 20 according to this embodiment has a laminated structure including a gas barrier layer 3 configured of a protective layer 5, a paper base material 1, an adhesive resin layer 2, a primer layer 11, a deposition layer 3a and a film base material 3b, and a sealant layer 4 in this order.

In the packaging material 20, the deposition layer 3a is disposed between the film base material 3b and the adhesive resin layer 2. Since the deposition layer 3a which is the hardest among the three layers is disposed between the film base material 3b and the adhesive resin layer 2, bending of the packaging material 20 tends to be curbed. Therefore, the obtained packaging material 20 has even better gas barrier properties. In addition, in the packaging material 20, the laminating order of the film base material 3b and the deposition layer 3a may be changed.

(Deposition layer)

The deposition layer 3a is a layer deposited with silicon oxide ($SiO_x$). Therefore, the packaging material 20 has excellent water resistance. A thickness of the deposition layer 3a may be appropriately set according to intended use, and is preferably 1 to 300 nm, more preferably 10 to 300 nm, and still more preferably 30 to 100 nm. When the thickness of the deposition layer 3a is set to 1 nm or more, the continuity of the deposition layer 3a can be easily made sufficient, and when it is set to 300 nm or less, occurrence of curling and cracking can be sufficiently curbed, and thus it is easy to achieve sufficient gas barrier performance and flexibility.
The deposition layer 3a may be a layer deposited with an inorganic compound or a metal other than silicon oxide ($SiO_x$). The deposition layer may be obtained by, for example, depositing aluminum, or may contain aluminum oxide ($AlO_x$).
From the viewpoint of oxygen gas barrier performance and film uniformity, the deposition layer 3a is preferably formed by a vacuum film formation means. The film formation means includes known methods such as a vacuum deposition method, a sputtering method, and a chemical vapor deposition method (CVD method), but the vacuum deposition method is preferred because of high film formation speed and high productivity thereof. In the vacuum deposition methods, in particular, a film formation means using electron beam heating is effective because film formation speed can be easily controlled by an irradiation area, an electron beam current, and the like, and heating and cooling of a deposition material can be performed in a short time.

(Film base material)

The film base material 3b is a polypropylene film. A thickness and a material of the film base material 3b may be the same as those of the gas barrier layer 3 in the packaging material 10 according to the above embodiment.

(Primer layer)

The primer layer 11 improves adhesion between the adhesive resin layer 2 and the deposition layer 3a. Materials for the primer layer 11 include, for example, anchor coating agents and lamination adhesives. Examples of the anchor coating agents include isocyanate-based resins, urethane-based resins, polyethyleneimine-based resins, polybutadiene-based resins, and organic titanium compounds. Examples of the lamination adhesives include polyurethane resins, polyacrylic resins, polyester-based resins, epoxy-based resins, polyvinyl acetate-based resins, and cellulose-based resins.
The primer layer 11 is formed through a process of applying a coating liquid onto a surface of the deposition layer 3a. As a coating method, conventionally known methods such as a casting method, a dipping method, a roll coating method, a gravure coating method, a screen printing method, a reverse coating method, a spray coating method, a kit coating method, a die coating method, a metering bar coating method, a chamber doctor combined coating method, and a curtain coating method which are commonly used can be used. The primer layer 11 is formed by heating and drying a coating film formed by applying a coating liquid. A thickness of the primer layer 11 is, for example, approximately 0.01 to 10 $\mu$m.

[Container]

<First embodiment>

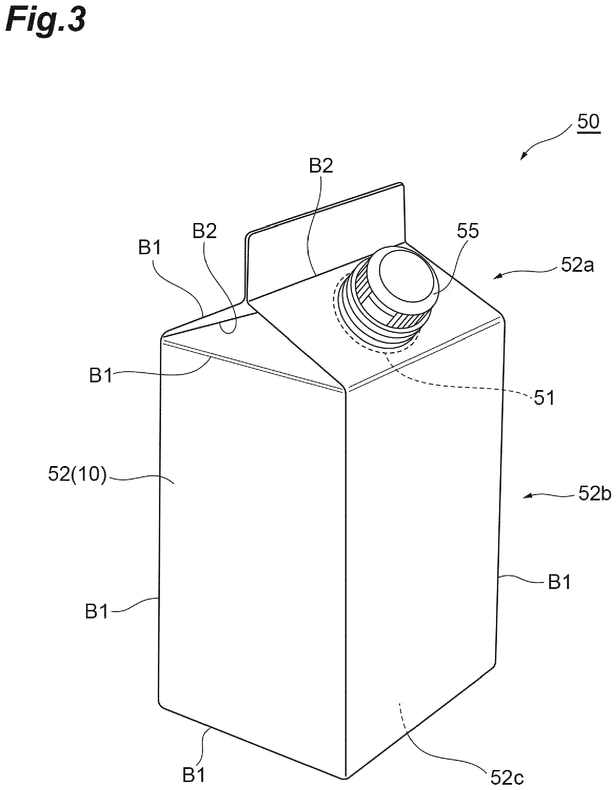

A container (a paper container) according to a first embodiment will be described below. A container 50 shown in FIG. 3 is manufactured using the packaging material 10. The container 50 may be made using the packaging material 20.
For example, the container 50 can fill and package various foods and drinks, chemicals such as adhesives and pressure-sensitive adhesives, cosmetics, sundries such as medicines, and various other articles. Since the container 50 has excellent gas barrier properties, it is particularly suitably used as a packaging container for filling and packaging alcoholic beverages, milk, juices such as fruit juice beverages, mineral water, liquid seasonings such as soy sauce and sauces, and liquid foods and beverages such as curry, stew and soup.
The container 50 is a gable top type container. The container 50 includes a rectangular tubular container main body 52 having an upper portion 52a having an opening 51, a side surface 52b and a bottom portion 52c, and a cap 55 closing the opening 51. The container main body 52 has the protective layer 5 of the packaging material 10 as the outermost layer and the sealant layer 4 as the innermost layer. The container main body 52 has portions (folded portions B1 and B2) in which the packaging material 10 is folded. The folded portion B1 is a portion in which the packaging material 10 is valley-folded when seen from the innermost layer side, while the folded portion B2 is a portion in which the packaging material 10 is mountain-folded when seen from the innermost layer side.

The container 50 is configured of the packaging material 10 that can maintain sufficient gas barrier properties even after tension is applied and that can curb leakage of the contents after heat sealing. Therefore, deterioration and leakage of the contents can be sufficiently curbed for a long period of time.

<Second embodiment>

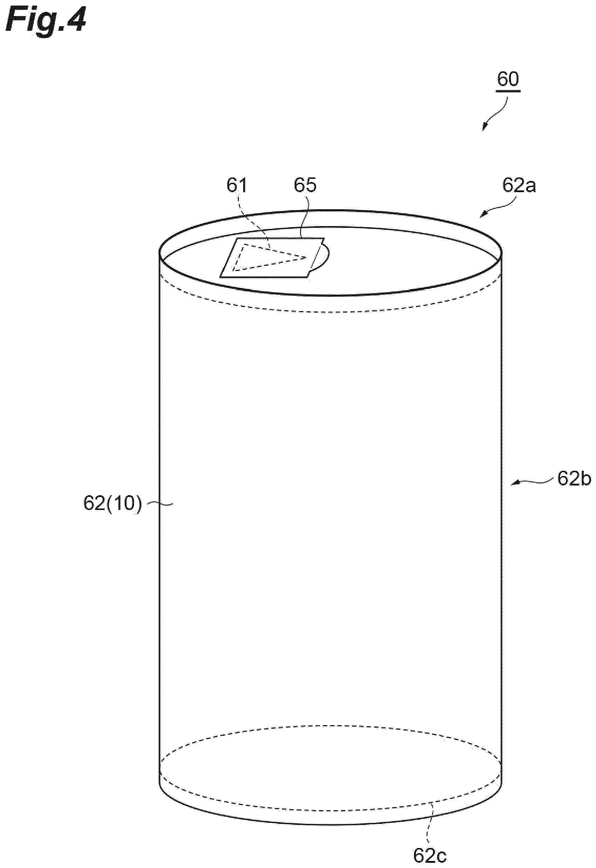

A container (a paper container) according to a second embodiment will be described. Points not described below are the same as those of the container according to the first embodiment, unless inconsistency occurs. A container 60 shown in FIG. 4 is manufactured using the packaging material 10. The container 60 may be manufactured using the packaging material 20.

The container 60 includes a cylindrical container main body 62 having an upper portion 62a having an opening 61, a side surface 62b and a bottom portion 62c, and a seal portion 65 closing the opening 61. The container main body 62 has the protective layer 5 of the packaging material 10 as the outermost layer and the sealant layer 4 as the innermost layer. The side surface 62b is configured of the packaging material 10 that is bent while being heated.

The packaging material 10 can be bent at a low temperature, can maintain sufficient gas barrier properties even after tension is applied by bending, and can curb leakage of the contents after heat sealing. Therefore, deterioration and leakage of the contents can be sufficiently curbed for a long period of time.

Although the embodiments of the present disclosure have been described above in detail, the present disclosure is not limited to the above embodiments. For example, the packaging material 20 may not include the primer layer 11. Further, although the container 50 has the opening 51 in the upper portion 52a, the opening 51 may not be provided. Moreover, the shape of the container is not limited to the shapes of the containers 50 and 60, and may be, for example, a brick type or a triangular pyramid shape.

[Examples]

The present disclosure will be described in more detail below based on examples and comparative examples, but the present disclosure is not limited to the following examples.

The following materials were prepared for the adhesive resin layer and the sealant layer.

· Ethylene-methacrylic acid copolymer A: N0908C (trade name, manufactured by Dow-Mitsui Polychemicals Co., Ltd., melting point: 99°C, Vicat softening point: 82°C, melt flow rate: 8 g/10 minutes, durometer hardness: 57)
· Ethylene-methacrylic acid copolymer B: AN4213C (trade name, manufactured by Dow-Mitsui Polychemicals Co., Ltd., melting point: 88°C, Vicat softening point: 62°C, melt flow rate: 10 g/10 minutes, durometer hardness: 47)
· Ethylene-methacrylic acid copolymer C: N1035 (trade name, manufactured by Dow-Mitsui Polychemicals Co., Ltd., melting point: 95°C, Vicat softening point: 71°C, melt flow rate: 35 g/10 minutes, durometer hardness: 54)
· Ethylene-methacrylic acid copolymer D: N1110H (trade name, manufactured by Dow-Mitsui Polychemicals Co., Ltd., melting point: 95°C, Vicat softening point: 68°C, melt flow rate: 100 g/10 minutes, durometer hardness: 53)
· Low-density polyethylene resin: LC600A (trade name, manufactured by Japan Polyethylene Corporation, melting point: 109°C, Vicat softening point: 93°C, melt flow rate: 0.9 g/10 minutes, durometer hardness: 48)

The melt flow rate is a value measured according to JIS K7210-1 under conditions of a temperature of 190°C and a load of 2.16 kg. The melting point is a value measured using a differential scanning calorimeter. The Vicat softening point is a value measured according to JIS K7206-1999. The durometer hardness is a value measured at 23°C according to JIS K7215:1986.

[Manufacture of packaging materials and containers]

(Example 1)

A packaging material according to this example was obtained through the following steps. That is, a gas barrier film was prepared by forming a deposition layer (a silica deposition layer, thickness: 50 nm) containing silica as a main component on one surface of a film base material (material: polypropylene resin, thickness: 18 $\mu$m). Two marks were

made on the polypropylene film at an interval of 100 mm in an MD direction in the subsequent extrusion lamination for the evaluation of stretchability described below. A sealant layer (material: ethylene-methacrylic acid copolymer A, thickness: 30 $\mu$m) was formed on the other surface of the film base material by extrusion lamination to obtain a laminate 1 including the deposition layer. Values shown in Table 1 were used as lamination temperature. On the other hand, a protective layer (material: polyethylene, thickness: 15 $\mu$m) was formed on one surface of a paper base material (basis weight: 260 g/m$^2$) to obtain a laminate 2 containing the paper base material. The laminates 1 and 2 were adhered together with the ethylene-methacrylic acid copolymer A (the adhesive resin layer) by extrusion lamination so that the deposition layer of the laminate 1 and the paper base material of the laminate 2 faced each other. A thickness of the adhesive resin layer was 15 $\mu$m. A temperature during the extrusion lamination was a value shown in Table 1.

The obtained packaging material was formed into a gable top type container. The temperature for heat sealing was a temperature shown in Table 1. The temperatures listed in Table 1 are the lowest possible temperatures within a temperature range that does not cause leakage of the contents. The leakage of the contents was confirmed by injecting an ageless seal check liquid (trade name, manufactured by Mitsubishi Gas Chemical Company, Inc.).

(Example 2)

A packaging material and a container were manufactured in the same manner as in Example 1, except that the ethylene-methacrylic acid copolymer B was used instead of the ethylene-methacrylic acid copolymer A as the sealant layer and the adhesive resin layer.

(Example 3)

A packaging material and a container were manufactured in the same manner as in Example 1, except that the ethylene-methacrylic acid copolymer C was used instead of the ethylene-methacrylic acid copolymer A as the sealant layer and the adhesive resin layer.

(Comparative example 1)

A packaging material and a container were manufactured in the same manner as in Example 1, except that a low-density polyethylene resin was used instead of the ethylene-methacrylic acid copolymer A as the sealant layer and the adhesive resin layer.

(Comparative example 2)

A packaging material and a container were manufactured in the same manner as in Example 1, except that a low-density polyethylene resin was used instead of the ethylene-methacrylic acid copolymer A as the sealant layer.

(Comparative example 3)

A packaging material was manufactured in the same manner as in Example 1, except that the ethylene-methacrylic acid copolymer D was used instead of the ethylene-methacrylic acid copolymer A as the sealant layer. An attempt was made to form the obtained packaging material into a gable top type container, but the sealing filling of the sealant layer was poor, and the leakage of the contents occurred.

[Evaluation of elongation of barrier film]

(Examples 1 to 3 and comparative examples 1 to 3)

A distance between the two marks applied in advance to the polypropylene film in the obtained packaging material was measured. A shrinkage ratio of the polypropylene film was calculated by substituting the obtained measured value (mm) into the following Equation (1). Table 1 shows the results.

$$\text{Shrinkage rate } (\%) = \{(100 - \text{measured value}) / 100\} \times 100$$

[Measurement of oxygen permeability]

(Examples 1 to 3 and comparative examples 1 and 2)

Measurement was performed under the conditions of a temperature of 30°C and a relative humidity of 70% using an oxygen permeability measuring device (manufactured by Mocon, trade name: "OX-TRAN 2/22"). The measurement was performed on the container immediately after box forming. Table 1 shows the results. The measured value was expressed as [(cc/pkg·day)].

[Evaluation of foaming phenomenon]

(Examples 1 to 3 and comparative examples 1 and 2)

The presence or absence of the foaming phenomenon from the paper base material was evaluated when the packaging material was heat-sealed to form a container. Evaluation was performed by visual judgment. Table 1 shows the results.

[Table 1]

| | Lamination temperature of sealant layer (°C) | Lamination temperature of adhesive resin layer (°C) | Sealing temperature (°C) | Stretchability (%) | Oxygen permeability (cc/pkg·day) | Presence or absence of forming phenomenon |
|---|---|---|---|---|---|---|
| Example 1 | 290 | 290 | 180 | 1.5 | 0.5 | Absence |
| Example 2 | 280 | 280 | 180 | 1 | 0.4 | Absence |
| Example 3 | 280 | 280 | 180 | 0.9 | 0.4 | Absence |
| Comparative example 1 | 320 | 320 | 250 | 3 | 3.8 | Presence |
| Comparative example 2 | 340 | 340 | 230 | 3 | 4.2 | Presence |
| Comparative example 3 | 290 | 290 | - | 1.8 | - | - |

The gist of the present disclosure resides in the following [1] to [7].

[1] A packaging material including:

a laminated structure including a paper base material, an adhesive resin layer, a gas barrier layer, and a sealant layer in this order, wherein
the sealant layer includes an ethylene-methacrylic acid copolymer, and
the sealant layer has a melt flow rate of 3.0 g/10 minutes or more and 40 g/10 minutes or less measured under conditions of a temperature of 190° C and a load of 2.16 kg.

[2] The packaging material according to [1], wherein the gas barrier layer has a film base material and a deposition layer,

the film base material includes a polypropylene film, and
the deposition layer contains an inorganic oxide.

[3] The packaging material according to [2], wherein the deposition layer is disposed between the film base material and the adhesive resin layer.
[4] The packaging material according to [1] or [2], wherein the adhesive resin layer contains an ethylene-methacrylic acid copolymer, and
the adhesive resin layer has a melt flow rate of 3.0 g/10 minutes or more and 40 g/10 minutes or less measured under conditions of a temperature of 190°C and a load of 2.16 kg.

[5] The packaging material according to [1] or [2], wherein a resin contained in the sealant layer has a melting point of 105°C or less and a Vicat softening point of 95°C or less.

[6] The packaging material according to [1] or [2], wherein a resin contained in the sealant layer has a durometer hardness of 45 or more at 23°C with a type D durometer.

[7] A container made of the packaging material according to [1] or [2].

Reference Signs List

1 Paper base material
2 Adhesive resin layer
3 Gas barrier layer
4 Sealant layer
5 Protective layer
11 Primer layer
10, 20 Packaging material
50, 60 Container

**Claims**

1. A packaging material comprising:

   a laminated structure comprising a paper base material, an adhesive resin layer, a gas barrier layer, and a sealant layer in this order, wherein
   the sealant layer includes an ethylene-methacrylic acid copolymer, and
   the sealant layer has a melt flow rate of 3.0 g/10 minutes or more and 40 g/10 minutes or less measured under conditions of a temperature of 190° C and a load of 2.16 kg.

2. The packaging material according to claim 1, wherein the gas barrier layer has a film base material and a deposition layer,

   the film base material includes a polypropylene film, and
   the deposition layer contains an inorganic oxide.

3. The packaging material according to claim 2, wherein the deposition layer is disposed between the film base material and the adhesive resin layer.

4. The packaging material according to any one of claims 1 to 3, wherein the adhesive resin layer contains an ethylene-methacrylic acid copolymer, and
   the adhesive resin layer has a melt flow rate of 3.0 g/10 minutes or more and 40 g/10 minutes or less measured under conditions of a temperature of 190°C and a load of 2.16 kg.

5. The packaging material according to any one of claims 1 to 4, wherein a resin contained in the sealant layer has a melting point of 105°C or less and a Vicat softening point of 95°C or less.

6. The packaging material according to any one of claims 1 to 5, wherein a resin contained in the sealant layer has a durometer hardness of 45 or more at 23°C with a type D durometer.

7. A container made of the packaging material according to any one of claims 1 to 6.

*Fig.1*

*Fig.2*

# *Fig.3*

*Fig.4*

## INTERNATIONAL SEARCH REPORT

| International application No. |
|---|
| **PCT/JP2022/025832** |

### A. CLASSIFICATION OF SUBJECT MATTER

*B65D 65/40*(2006.01)i; *B65D 5/40*(2006.01)i; *B65D 5/74*(2006.01)i
FI:   B65D65/40 D; B65D5/40; B65D5/74

According to International Patent Classification (IPC) or to both national classification and IPC

### B. FIELDS SEARCHED

Minimum documentation searched (classification system followed by classification symbols)

B65D65/40; B65D5/40; B65D5/74

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2021/006172 A1 (DOW-MITSUI POLYCHEMICALS CO., LTD.) 14 January 2021 (2021-01-14) <br> claim 1, paragraphs [0032], [0052], [0054] | 1-7 |
| Y | JP 2020-158154 A (DAINIPPON PRINTING CO., LTD.) 01 October 2020 (2020-10-01) <br> paragraph [0059] | 1-7 |
| Y | JP 2014-133568 A (TOPPAN PRINTING CO., LTD.) 24 July 2014 (2014-07-24) <br> paragraphs [0027] | 3-7 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 July 2022** | **09 August 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/025832**

| Patent document cited in search report | | | Publication date (day/month/year) | Patent family member(s) | Publication date (day/month/year) |
|---|---|---|---|---|---|
| WO | 2021/006172 | A1 | 14 January 2021 | (Family: none) | |
| JP | 2020-158154 | A | 01 October 2020 | (Family: none) | |
| JP | 2014-133568 | A | 24 July 2014 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2001171649 A